# EUROPEAN PATENT APPLICATION

(11) **EP 2 515 537 A1**
(43) Date of publication of application: **24.10.2012**
(21) Application number: 10837573.4
(22) Date of filing: 13.12.2010
(51) Int. Cl.: H04N 7/173, G06F 13/00

(54) **CONTENT DELIVERY SYSTEM, CONTENT DELIVERY APPARATUS, CONTENT PLAYBACK TERMINAL AND CONTENT DELIVERY METHOD**

(30) Priority: 15.12.2009 JP 2009284284
(71) Applicant: Sharp Kabushiki Kaisha, Osaka-shi, Osaka 545-8522 (JP)
(72) Inventor: TAKAHASHI, Maki, Osaka-shi, Osaka 545-8522 (JP); SEKI Yoshinori, Osaka-shi, Osaka 545-8522 (JP)
(74) Representative: Müller - Hoffmann & Partner
(86) International application number: PCT/JP2010/072402
(87) International publication number: WO 2011/074547

(57) **Abstract**

In a content distribution system, a content distribution device performs on-demand distribution of video content to a content playback terminal via a network. Before a user plays back video content from a distribution menu, the content playback terminal preliminarily receives from the content distribution device, the distributed video content to which cache control information is added, and then writes the received video content in a temporal storage device included therein. If video content selected by the user is present in the temporal storage device, that video content is played back. On the other hand, if the selected video content is not present in the temporal storage device, a distribution request for the selected video content is made to the content distribution device.

## Description

### TECHNICAL FIELD

The present invention relates to a content distribution system, a content distribution device, a content playback terminal, and a content distribution method.
Priority is claimed on Japanese Patent Application No. 2009-284284, filed December 15, 2009, the content of which is incorporated herein by reference.

### BACKGROUND ART

Recently, high-speed broadband lines, such as an ADSL (Asymmetric Digital Subscriber Line) or an FTTH (Fiber To The Home, which is data communication service for home use provided through optical fibers), have been widespread. Along with the widespread use of high-speed broadband lines, a content distribution system that implements on-demand video content distribution service with respect to various moving pictures, such as movies, dramas, or news, has been practically used.
Regarding a conventional content distribution system for on-demand distribution, a content playback terminal accesses a content distribution device using an HTML (HyperText Markup Language) browser included in the content playback terminal, and receives a video content distribution menu described in HTML. Then, from the distribution menu displayed on the HTML browser, a user selects desired video content to be played back, thereby initiating on-demand distribution of the video content.
Additionally, as a method of playing back video content to be distributed, any of a streaming playback, a download playback, and a progressive download playback is generally used.

Here, different from HTTP (HyperText Transfer Protocol) that is a protocol for general-purpose data communication used by the HTML browser, the streaming playback is a method in which video content is received in real time using, for example, an RTP (Real Time Protocol) that is a dedicated protocol for real-time video content distribution, and the reception and playback of the video content are performed at the same time.
However, this streaming playback uses the dedicated protocol as explained above, and therefore is occasionally affected by a blocking state of a firewall set on a network between a content distribution device and a content playback terminal or by a process of translating a destination address performed by an NAT (Network Address Translator). In other words, the firewall or the NAT occasionally blocks the communication by the dedicated protocol, thereby causing a problem in that playback of video content by any content playback terminal connected to the network is not secured.

Additionally, the download playback is a method in which a content playback terminal once receives all data of video content, and initiates playback of the received video content after the reception is completed.
Regarding the download playback, if HTTP that is the general-purpose data communication protocol is used when video content is distributed, there is no concern such that distribution of video content is blocked by the firewall or the NAT as in the case of the streaming playback. However, the download playback has a problem of a long waiting period from the time a user selects video content to the time all data of the video content is downloaded and playback is initiated.

Further, the progressive download playback can solve the problem of the playback start waiting period that is the defect of the above download playback. The progressive download playback is a method in which playback of the video content being received is initiated when the amount of received data becomes a predetermined amount (see, for example, Patent Document 1 and Patent Document 2).

### CITATION LIST

### [Patent Document]

[Patent Document 1] PCT Application International Publication No. 2004/077790
[Patent Document 2] Japanese Patent Unexamined Application, First Publication No. 2002-94551

### DISCLOSURE OF THE INVENTION

### Problems to be Solved by the Invention

However, the progressive download playback uses the HTTP that is the general-purpose data communication protocol without consideration of real-time distribution. For this reason, the data transmission speed during reception and playback of video content greatly varies due to a usage state or the like of a network.
For this reason, regarding the progressive download playback, it is necessary to previously receive more data before playback is initiated than in the case of the streaming playback. Otherwise, it is impossible to remedy the variation in the data transmission speed during reception and playback of video content.

Regarding the progressive download playback, however, it is not necessary to receive all data prior to playback. For this reason, compared to the download playback, it is possible to greatly reduce the waiting period from the time a user selects video content to the time playback of the video content is initiated.
Regarding the progressive download playback, on the other hand, it is necessary to previously receive more video content data prior to playback than in the case of the streaming playback, thereby still causing a problem in that the waiting period until playback of video content is initiated is longer than in the case of the download playback.

The present invention has been made to solve the above problems, and provides a content distribution system, a content distribution device, a content playback terminal, and a content distribution method, which further reduce, than in the case of the conventional progressive download playback, the waiting period from the time a user selects video content from a distribution menu to the time that video content is actually played back.

### Means for Solving the Problems

(1) The present invention has been made to solve the above problems. One aspect of the present invention is a content distribution system in which a content distribution device performs on-demand distribution of video content to a content playback terminal via a network. The content distribution device includes: a storage unit configured to store at least a plurality of video contents, and menu information in which a list of the video contents and identification informations of the video contents are described; and a data distributor configured to add to the menu information, cache control information in which at least one of the video contents described in a distribution menu is described, and distribute the menu information to the content playback terminal, and if identification information indicating the video content is received from the content playback terminal, the data distributor being configured to read the video content corresponding to the identification information from the storage unit, and transmit the video content to the content playback terminal. The content playback terminal includes: a display unit; a temporal storage unit; a video content playback unit configured to cause the display unit to display the menu information and the video content; a browser unit configured to add to a distribution request, the identification information of video content selected from the video contents on the distribution menu displayed on the display unit based on the menu information, and transmit the distribution request to the content distribution device; and a data transmission and reception unit configured to, if the cache control information is added to the menu information, transmit to the content distribution device, a distribution request for the video content described in the cache control information, before a user selects video content from the distribution menu, and the data transmission and reception unit being configured to write in the temporal storage unit, the video content distributed in response to the distribution request.

(2) Additionally, regarding the content distribution system according to one aspect of the present invention, the storage unit is configured to store a plurality of menu informations and cache control information correlated to the menu informations, identification information of the same video content being described in the cache control information.

(3) Additionally, regarding the content distribution system according to one aspect of the present invention, each of the video contents is divided into a plurality of partial video contents, the storage unit is configured to store, for each of the video contents which corresponds to the partial video contents, the partial video contents and a play list correlated to the partial video contents, a playback order of the partial video contents and identification informations of the partial video contents being described in the play list, and identification information of the video content is added to the play list.

(4) Additionally, regarding the content distribution system according to one aspect of the present invention, if the data transmission and reception unit makes a distribution request for the video content described in the cache control information, the data distributor is configured to transmit to the content playback terminal, a beginning part of the video content requested for distribution, the beginning part having a predetermined amount of data counted from a playback start point of the video content.

(5) Additionally, regarding the content distribution system according to one aspect of the present invention, the browser unit is configured to display, when displaying the distribution menu on the display unit, video content described in the cache control information in a visually more emphasized display format, compared to video content not described in the cache control information.

(6) Additionally, regarding the content distribution system according to one aspect of the present invention, the browser unit is configured to group one or more video contents, which are described in the cache control information and stored in the temporal storage unit, to one genre on the distribution menu, and display the genre with other genres on the distribution menu.

(7) Additionally, regarding the content distribution system according to one aspect of the present invention, attribution information is added to the cache control information for each of the video contents, and the data transmission and reception unit is configured to determine, based on the attribute information, an order of distribution requests for the video contents described in the cache control information.

(8) Additionally, regarding the content distribution system according to one aspect of the present invention, the attribute information includes the data lengths of the video contents, and the data transmission and reception unit is configured to make distribution requests for the video contents described in the cache control information in order according to the data length with the shortest data length first.

(9) Additionally, regarding the content distribution system according to one aspect of the present invention, the attribute information includes information indicating a genre of the video content, and the data transmission and reception unit is configured to make a distribution request for the video content which is described in the cache control information and is added with the attribute information indicating the same genre as a genre preliminarily set in the data transmission and reception unit, in preference to the video content which is described in the cache control information and is added with the attribute information indicating a different genre from the genre preliminarily set.

(10) Additionally, regarding the content distribution system according to one aspect of the present invention, the content distribution device further includes: a distribution history database configured to store identification informations of the video contents requested for distribution and distribution destination identification informations that identify sources of the distribution requests for the video contents, while correlating the identification informations and the distribution destination identification informations; and a cache control information generator configured to generate different cache control informations respectively for the distribution destination identification informations, based on a distribution history recorded in the distribution history database. The cache control information generator is configured to read the distribution history corresponding to each of the distribution destination identification informations, and generate different cache control informations respectively for the distribution destination identification informations. The data distributor is configured to distribute the cache control informations generated by the cache control information generator, to content playback terminals respectively corresponding to the distribution source identification informations.

(11) One aspect of the present invention is a content distribution device configured to be used in a content distribution system in which the content distribution device performs on-demand distribution of video content to a content playback terminal via a network. The content distribution device includes: a storage unit configured to store at least a plurality of video contents, and menu information in which a list of the video contents and identification informations of the video contents are described; and a data distributor configured to add to the menu information, cache control information in which at least one of the video contents described in a distribution menu is described, and distribute the menu information to the content playback terminal, and if identification information indicating the video content is received from the content playback terminal, the data distributor being configured to read the video content corresponding to the identification information from the storage unit, and transmit the video content to the content playback terminal.

(12) One aspect of the present invention is a content playback terminal configured to be used in a content distribution system in which a content distribution device performs on-demand distribution of video content to the content playback terminal via a network. The content playback terminal includes: a display unit; a temporal storage unit; a video content playback unit configured to cause the display unit to display the menu information and the video content; a browser unit configured to add to a distribution request, the identification information of video content selected from the video contents on a distribution menu displayed on the display unit based on the menu information, and transmit the distribution request to the content distribution device; and a data transmission and reception unit configured to, if the cache control information is added to the menu information, transmit to the content distribution device, a distribution request for the video content described in the cache control information, before a user selects video content from the distribution menu, and the data transmission and reception unit being configured to write in the temporal storage unit, the video content distributed in response to the distribution request.

(13) One aspect of the present invention is a content distribution method using a content distribution system in which a content distribution device performs on-demand distribution of video content to a content playback terminal via a network. The content distribution method includes steps for a data distributor included in the content distribution device: adding to menu information showing video contents to be distributed, cache control information in which at least one of video contents described in a distribution menu is described; distributing the menu information to the content playback terminal; if identification information indicating the video content is received from the content playback terminal, reading the video content corresponding to the identification information from a storage unit storing at least a plurality of video contents, and menu information in which a list of the video contents and identification informations of the video contents are described; and transmitting the video content to the content playback terminal. The content distribution method further includes: if a video content playback unit of the content playback terminal causes a display unit of the content playback terminal to display the menu information and the video content, a step of a browser unit of the content playback terminal adding to a distribution request, the identification information of video content selected from the video contents on the distribution menu displayed on the display unit based on the menu information, and transmitting the distribution request to the content distribution device; and if the cache control information is added to the menu information, a step of a data transmission and reception unit of the content playback terminal transmitting to the content distribution device, a distribution request for the video content described in the cache control information, before a user selects video content from the distribution menu, and writing in the temporal storage unit, the video content distributed in response to the distribution request.

### Effects of the Invention

According to the present invention, it is possible to further reduce, than in the case of the conventional progressive download playback, the waiting period from the time the distribution request for video content is made to the time playback of the video content is initiated.

### BRIEF DESCRIPTION OF THE DRAWINGS

FIG. 1 is a block diagram illustrating an example of a configuration of a content distribution system according to a first embodiment of the present invention.
FIG. 2 is a diagram illustrating the relationship among distribution data stored in a storage device 11 included in a content distribution device 10.
FIG. 3 is a diagram illustrating the state transition relationship among operation states of the content distribution system according to the first embodiment.
FIG. 4 is a flowchart illustrating an example of operations of a menu display process in a menu display process state that is an initial state.
FIG. 5 is a diagram illustrating a menu screen to be displayed on a display unit 21.
FIG. 6 is a diagram illustrating a menu screen to be displayed on a display unit 21.
FIG. 7 is a flowchart illustrating an example of operations in a user operation waiting state according to the first embodiment.
FIG. 8 is a flowchart illustrating an example of operations in a video content playback process in a video content playback process state according to the first embodiment.
FIG. 9 is a diagram illustrating an example of menu information displayed on the display unit 21 of the content playback terminal 20, the menu information having a structure that attracts a user to video content added to cache control information.
FIG. 10 is a diagram illustrating an example of the reference relationship among distribution data, such as menu information, cache control information, and video content.
FIG. 11 is a diagram illustrating an example of another structure of the reference relationship among distribution data, such as menu information, cache control information, and video content.
FIG. 12 is a diagram illustrating an example of the specific reference relationship among distribution data including the aforementioned menu information, playlists, cache control information, and video content.
FIG. 13 is a flowchart illustrating an example of operations in a user operation waiting state according to a second embodiment.
FIG. 14 is a flowchart illustrating an example of operations in a video content playback process in a video content playback process state according to the second embodiment.
FIG. 15 is a flowchart illustrating an example of operations in a video content reception process by cache distribution in a user operation waiting state according to a third embodiment.
FIG. 16 is a flowchart illustrating an example of operations in a video content reception process by cache distribution in a user operation waiting state according to a fourth embodiment.
FIG. 17 is a block diagram illustrating an example of a configuration of a content distribution system according to a fifth embodiment of the present invention.

### BEST MODE FOR CARRYING OUT THE INVENTION

### [First Embodiment]

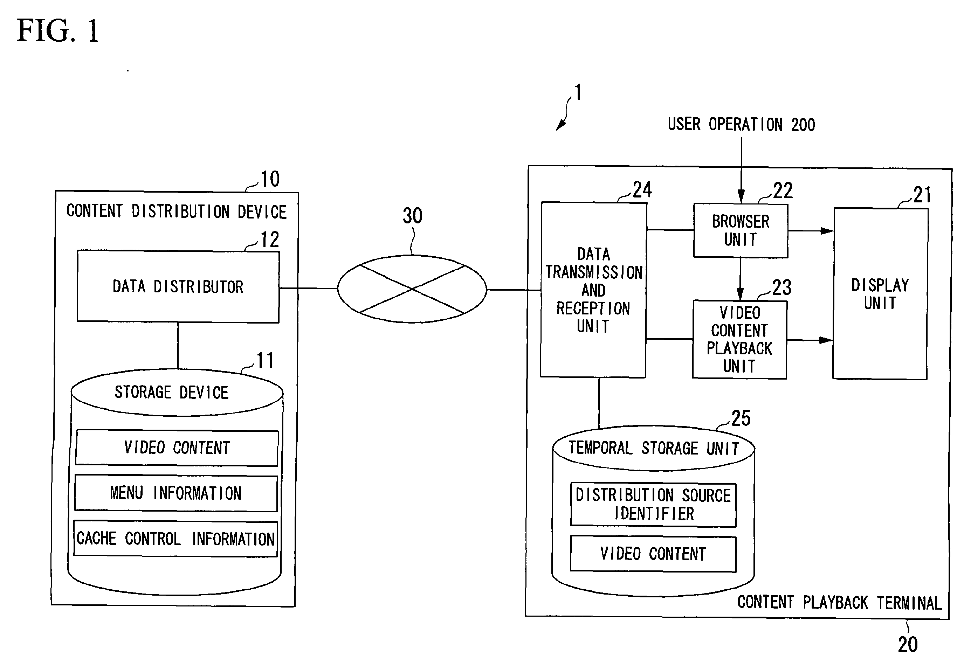

Hereinafter, a first embodiment of the present invention is explained with reference to the drawings. FIG. 1 is a diagram illustrating an example of a configuration of a content distribution system 1 according to the first embodiment of the present invention.
In FIG. 1, a content distribution system 1 of the first embodiment includes: a content distribution device 10 that distributes video content in response to a distribution request from a user; and a content playback terminal 20 that plays back the video content distributed from the content distribution device 10. Here, the content distribution device 10 and the content playback terminal 20 are connected via a communication network 30, such as the Internet.

The content distribution device 10 includes a storage device 11 and a data distributor 12.
The storage device 11 previously stores, as distribution data to be distributed to the content playback terminal 20, various distribution data, such as at least one video content, at least one menu information to select video content to be distributed, and at least one cache control information to control video content that the content distribution terminal 20 temporarily stores in a temporal storage device (cache) 25. Here, a URL (Uniform Resource Locator) as identification information that identifies video content to be distributed by the content distribution device 10 is described in the menu information. The cash control information is added to, and is referred to by, the menu information. As identification information associated with video content among those included in the distribution menu, which is determined based on a playback frequency of each video content, a URL of the video content is previously set to the cache control information.
Based on a distribution request transmitted from the content playback terminal 20, the data distributor 12 distributes various distribution data recorded in the storage device 11 by HTTP to the content playback terminal 20 having transmitted the distribution request.

The content playback terminal 20 includes: a display unit 21; a browser unit 22; a video content playback unit 23; a data transmission and reception unit 24; and a temporal storage device 25.
Under control of the browser unit 22, the display unit 21 displays a distribution menu of video contents that the content distribution device 10 can distribute, and images of the video content that the video content playback unit 23 plays back.
The browser unit 22 is compatible with an HTML document. The browser unit 22 interprets menu information which is described in HTML format and is distributed from the content distribution device 10, and outputs to the display unit 21, the menu information as a distribution menu screen for video content.
Additionally, if a user selects video content from the distribution menu screen displayed on the display unit 21, the browser unit 22 detects the selected video content, and outputs to the video content playback unit 23, a playback request for the detected video content, while adding a URL of the video content to the playback request.
Further, upon receiving the menu information distributed from the content distribution device 10, the browser unit 22 outputs to the data transmission and reception unit 24, a distribution request for video content described in the cache control information added to the menu information, along with the URL of that video content.

Based on an acquisition request supplied from the browser unit 22 and the video content playback unit 23, the data transmission and reception unit 24 transmits to the content distribution device 10, a distribution request for various data, such as the video content specified by a description in HTML format, and the menu information, while adding to the distribution request, the URLs that are identification informations of the various data.
Additionally, the data transmission and reception unit 24 receives the distribution data distributed from the content distribution device 10 in response to the distribution request.
If the video content requested by the browser unit 22 to play back is distributed from the content distribution device 10, the video content playback unit 23 receives the video content via the data transmission and reception unit 24, and plays back the video content on the display unit 21.
The data transmission and reception unit 24 writes and temporarily stores in the temporal storage device 25, video content distributed from the content distribution device 10 and the URL of the video content while correlating the video content to the URL of the video content.

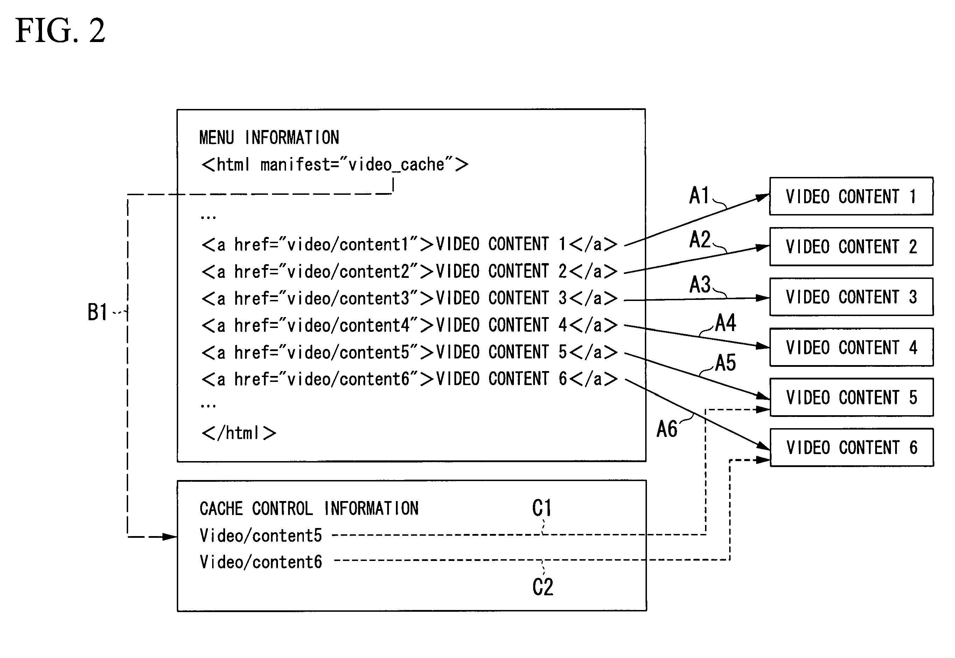

Next, the relationship diagram of each distribution data stored in the storage device 11 of the content distribution device 10 is shown in FIG. 2.
For example, as shown in FIG. 2, in the first embodiment, six video contents (video content 1 to video content 6), one menu information described in HTML format, and one cache control information to be referred to by the menu information (cache control information 1), are previously stored in the storage device 11.

Additionally, arrows shown in FIG. 2, which connect each of the distribution data, indicate the reference relationship between each of the distribution data.
In other words, URLs of the video contents in the menu information are connected to the video content 1, video content 2, video content 3, video content 4, video content 5, and video content 6 by the solid arrows A1, A2, A3, A4, A5, and A6, respectively.
As the relationship between the menu information and each of the URLs of the video contents, the URL of the video content is correlated to a character string of the video content displayed as the distribution menu.
For this reason, if the menu information is displayed as the distribution menu on the display unit 21, and if a user selects any one of the character strings of the video contents, the browser unit 22 reads the URL correlated to the character string of that video content, and outputs to the video content playback unit 23, control information that causes the video content playback unit 23 to perform playback of the video content correlated to the URL.

Additionally, the menu information and the cache control information are connected to each other by a dashed arrow B1. Such a relationship between the menu information and the cache control information, which is indicated by the dashed arrow B1, indicates that the cache control information connected by the dashed arrow B1 as the menu information is valid cache control information with respect to the menu information, when the menu information is displayed as the distribution menu on the display unit 21 of the content playback terminal 20.

Further, the cache control informations are connected to the video content 5 and the video content 6 by dotted arrows C1 and C2, respectively.
Such relationships between the cache control informations and the video contents 5 and 6, which are shown by the dotted arrows C1 and C2, indicate that the video content 5 and the video content 6 are distributed preliminarily before a user of the content playback terminal 20 selects video content from the distribution menu, if the cache control informations are valid. The content playback terminal 20 temporarily stores in the temporal storage device 25, the video content 5 and the video content 6 which are preliminarily distributed (cache distribution that will be explained later).

As explained above, in the content distribution system according to the first embodiment, the menu information, the cache control information, the video content, which have the reference relationship among those distribution data, are used as distribution data.
According to this configuration, in the first embodiment, there are two video content distribution processes performed by the content distribution device 10, which are the following on-demand distribution and cache distribution.

### • On-Demand Distribution

The on-demand distribution is an on-demand video content distribution method in which a user selects video content from menu information displayed on the display unit 21, and then the browser unit 22 makes a distribution request for the selected video content.

### • Cache Distribution

The cache distribution is a distribution method of preliminarily distributing, prior to a video content distribution request made by user operation, based on cache control information referred to by the menu information distributed by the content distribution device 10, video content having a high possibility of being played back which is specified by the cache control information.
Regarding the cache distribution, which is different from the on-demand distribution invoked by a user operation for the distribution request, video content having a high playback possibility, which is specified by the cache control information referred to by the menu information distributed by the content distribution device 10, is preliminarily distributed before a user makes a distribution request by selecting video content from the menu information.
Hereinafter, similar meanings of the solid arrows, the dashed arrow, and the dotted arrows apply to drawings other than FIG. 2, which show the relationship between each of distribution data, and explanations thereof are omitted.

Additionally, explanations regarding the content distribution system of the first embodiment are given here with respect to a case in which the menu information is provided as an HTML document. However, any other data format, such as a BML (Broadcast Markup Language) document or an XML (extensible Markup Language) document, may be used as long as the reference relationship among distribution resources as explained above can be described in the other format. Such other data format can be used by replacing the browser unit 22 of the content playback terminal 20 with another browser compatible with the other data format.

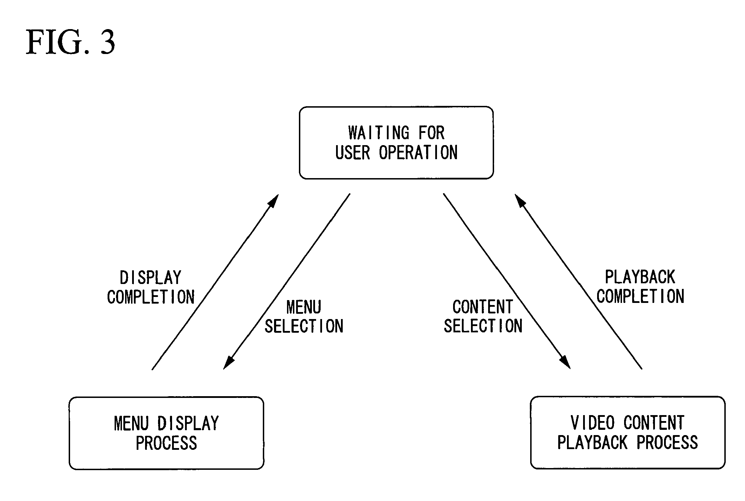

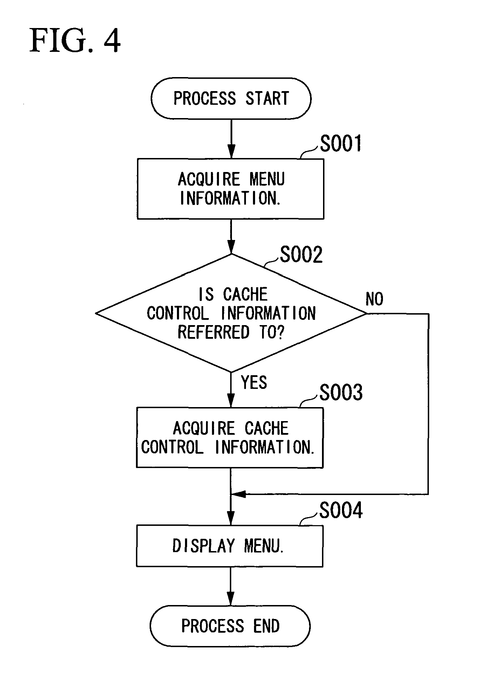

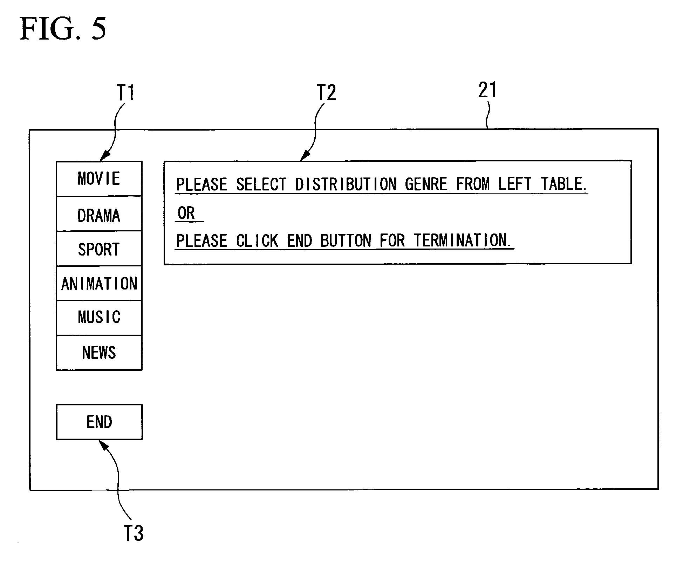

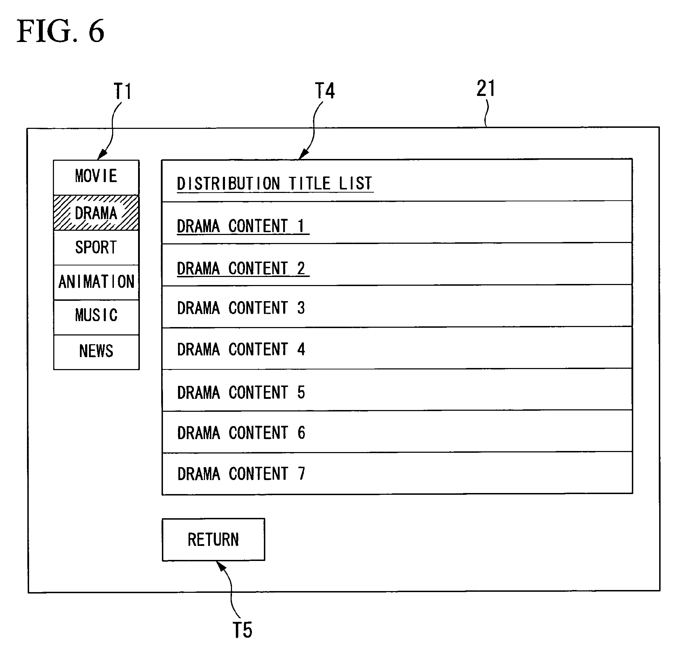

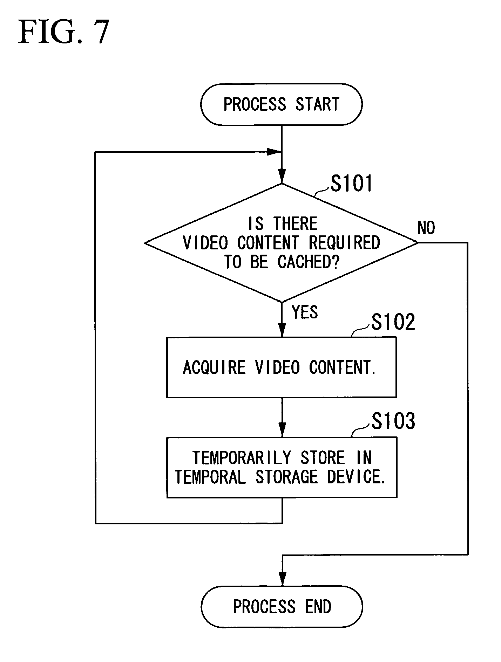

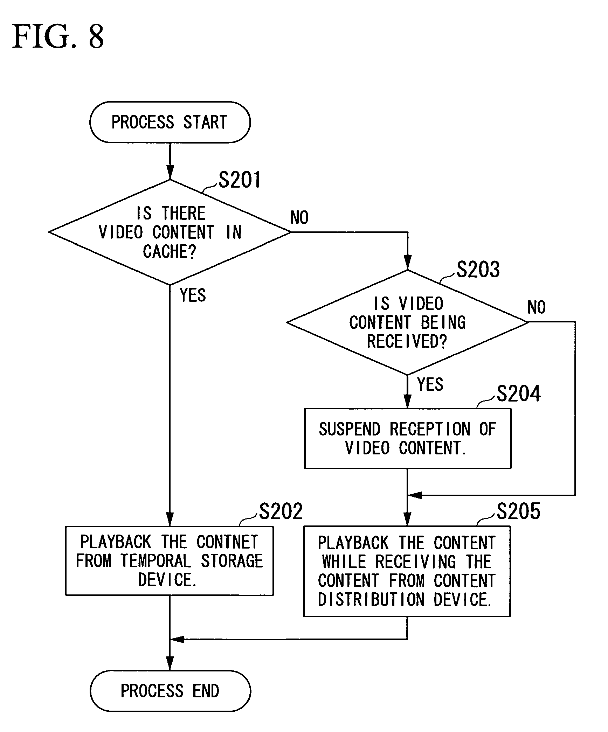

Next, operations of the content distribution system of the first embodiment are explained with reference to the state transition shown in FIG. 3, the flowcharts shown in FIGS. 7 and 8, and the menu screens to be displayed on the display unit 21 which are shown in FIGS. 5 and 6. FIG. 3 is a diagram illustrating the state transition among operation states of the content distribution system according to the first embodiment, which will be explained later.
As shown in the state transition diagram of FIG. 3, the operation states of the content distribution system according to the first embodiment are grouped into three states, which are a menu display process state, a user operation waiting state, and a video content playback process state. Then, each state transits to another state upon completion of each process (display completion, playback completion) or by user operation (menu selection, content selection). Hereinafter, operations in each state are explained with reference to the flowcharts shown in FIGS. 4, 5, and 6, each of which illustrates operations of the state.

Firstly, operations of a menu display process in the menu display process state, which is the initial state, are explained with reference to FIG. 4. FIG. 4 is a flowchart illustrating an example of operations of the menu display process in the menu display process state that is the initial state. FIGS. 5 and 6 are diagrams illustrating screens that the browser unit 22 displays on the display unit 21 at the time of the menu display operations.

### Step S001:

If a user invokes an application for video distribution/playback, the browser unit 22 causes the display unit 21 to display a selection screen shown in FIG. 5.

A long table T1 on the left side of the screen is a genre selection menu to select menu information in which video content to be requested for distribution is described, according to genres such as movies, dramas, or sports. On a table T2 on the upper part of the screen, a character string for inducing to select a distribution genre of video content from the genre selection menu is displayed. Additionally, a character string for explaining operation for termination is also displayed. Further, a button T3 on the bottom left of the screen is a button for the browser unit 22 to terminate the application for video distribution/playback upon a user specifying and clicking the button by operating a pointing device (user operation 200, which is hereinafter simply referred to as "clicking").

For example, the URL of the menu information associated with the button of each genre is previously set in the browser unit 22, as part of the application. For this reason, if a user clicks by operating a pointing device (hereinafter, simply "click") the "drama" button on the table 1, the browser unit 22 detects that the drama button has been clicked. Upon detecting that the drama button has been clicked, the browser unit 22 transmits a distribution request including the URL associated with the "drama" button, to the content distribution device 10 via the data transmission and reception unit 24 and the communication network 30. Thereby, the browser unit 22 makes a distribution request for the menu information regarding the "drama" to the content distribution device 10.

Upon receiving the distribution request from the content playback terminal 20, the data distributor 12 of the content distribution device 10 extracts the URL of the menu information included in the distribution request, and reads from the storage device 11, the menu information associated with the URL.

Then, the data distributor 12 distributes, via the communication network 30, the read menu information to the content playback terminal 20 having made the distribution request.

### Step S002:

Upon receiving the menu information distributed from the content distribution device 10, the browser unit 22 determines whether or not the menu information includes information that orders to perform cache distribution, based on whether or not the URL that refers to the cache control information is included in the document of the menu information.
At this time, if the menu information includes the cache control information as information to be referred to, the browser unit 22 proceeds to step S003. On the other hand, if the menu information does not include the cache control information as information to be referred to, the browser unit 22 proceeds to step S004.

### Step S003:

Then, the browser unit 22 extracts the URL of the cache control information added to the menu information, and transmits to the data transmission and reception unit 24, a data acquisition request for cache control information, to which the URL of the extracted cache control information is added.

Upon receiving the data acquisition request for cache control information, based on the data acquisition request, the data transmission and reception unit 24 transmits to the content distribution device 10 via the communication network 30, a distribution request for the cache control information indicated by the URL.

The data distributor 12 of the content distribution device 10 searches the storage device 11 for the cache control information correlated to the URL supplied from the content playback terminal 20, by referring to that URL. Thereby, the data distributor 12 reads from the storage device 11, the cache control information stored while being correlated to the URL.

Then, the data distributor 12 distributes the cache control information read from the storage device 11, to the content playback terminal 20 having transmitted the distribution request. The URL of the cache control information which is added to the menu information and the cache control information referred to by the URL are correlated to each other and previously set to the storage device 11.

### Step S004:

The browser unit 22 displays on the display unit 21, the menu information distributed as an HTML document, as a distribution menu for video content. Then, the browser unit 22 terminates the video content menu display process, and transits to the user operation waiting state.
For example, the browser unit 22 outputs to the display unit 21, the menu information which is distributed from the content distribution device 10 and is provided as an HTML document, as a distribution menu for video content belonging to the genre of "drama," as shown in FIG. 6. Then, the browser unit 22 causes the display unit 21 to display the menu information as a table T4 on the center of the screen. In the table T4, character strings indicating the names of video contents, such as drama content 1, the drama content 2, ..., are displayed below the display of a character string "distribution title list." Additionally, the button T5 is a button to be clicked to return the screen back to the genre selection menu screen. Upon detecting that the button T5 has been clicked, the browser unit 22 performs a display process that causes the display unit 21 to return the screen display shown in FIG. 6 to the screen display shown in FIG. 5, as the process to return to the genre selection menu.
By the above screen being displayed as shown in FIG. 6, the distribution menu for a user to select video content, which shows distribution information according to genre, is displayed on the display unit 21.

Next, operations in the user operation waiting state are explained with reference to FIG. 7. FIG. 7 is a flowchart illustrating an example of operations in the user operation waiting state according to the first embodiment.
In the content distribution system according to the first embodiment, the browser unit 22 not only waits for user operation, but also performs a video content cache process using the user operation waiting period. Hereinafter, an example of operations for cache distribution of video content performed in the user operation waiting state is explained.

### Step S101:

Based on the cache control information acquired in step S003, the data transmission and reception unit 24 of the content playback terminal 20 determines whether or not the video content referred to by the cache control information is stored in the temporal storage device 25.

Here, the video content and the URL of the video content as a distribution source identifier that identifies that video content are correlated to each other and stored in the temporal storage device 25.

Accordingly, the data transmission and reception unit 24 compares the URL of the video content stored in the temporal storage device 25 to the URL of the video content described in the cache control information.

Based on whether or not all the URLs of the video contents described in the cache control information are present in the temporal storage device 25, the data transmission and reception unit 24 determines whether or not all the video contents specified by the cache control information which are to be received by cache distribution have been received by cache distribution and stored in the temporal storage device 25.

As a result, if all the video contents described in the cache control information to be received by cache distribution are present in the temporal storage device 25, the data transmission and reception unit 24 terminates the process of receiving the video contents by cache distribution, and enters the waiting state until video content is selected from the distribution menu on the display unit 21 of a user.

On the other hand, if any one of the video contents to be received by cache distribution is not present in the temporal storage device 25, the data transmission and reception unit 24 proceeds to step S102.

### Step S102:

The data transmission and reception unit 24 extracts a URL of video content not stored in the temporal storage device 25 from among the URLs of the video contents described in the cache control information. Then, the data transmission and reception unit 24 adds the extracted URL of that video content to a data distribution request for that video content, and transmits the data distribution request to the content distribution device 10.
The data distributor 12 of the content distribution device 10 extracts the URL of the video content from the distribution request transmitted from the data transmission and reception unit 24. Similar to the cases of menu information and cache control information, the data distributor 12 reads from the storage device 11, the video content specified by the extracted URL. Then, the data distributor 12 distributes the read video content to the content playback terminal 20.

### Step S103:

Upon receiving the video content distributed from the content distribution device 10, the data transmission and reception unit 24 correlates the received video content and the URL that identifies that video content, and writes and stores the video content and the URL in the temporal storage device 25. Then, the data transmission and reception unit 24 proceeds to step S101.
By the above procedure, the cache distribution process for the video content using the user operation waiting period is performed.

Next, operations of a video content playback process to be performed in the video content playback process state are explained here. FIG. 8 is a flowchart illustrating an example of operations of a video content playback process to be performed in the video content playback process state.

### Step 201:

A user clicks and selects any one of video contents from the distribution menu displayed on the display unit 21.

The browser unit 22 extracts the URL of the video content selected by the user from the distribution menu, from the description of the character string of the video content and the description of the URL correlated to the video content, which are included in the menu information. Then, the browser unit 22 requests the video content playback unit 23 to play back the video content specified by the URL. In other words, at this time, the browser unit 22 transmits to the video content playback unit 23, a playback request to which the URL of the video content selected by the user is added.

Then, the video content playback unit 23 outputs to the data transmission and reception unit 24, a data acquisition request for the video content, to which the URL supplied from the browser unit 22 is added.

Upon receiving the data acquisition request, the data transmission and reception unit 24 extracts the URL of the video content included in the data acquisition request. Then, the data transmission and reception unit 24 searches the temporal storage device 25 using the URL as a key. In other words, the data transmission and reception unit 24 compares the URL added to the data acquisition request to the URL stored as a distribution source identifier in the temporal storage device 25. Thereby, the data transmission and reception unit 24 determines the presence or absence of a URL identical to the URL added to the data acquisition request.

If the URL identical to the URL added to the data acquisition request is stored in the temporal storage device 25 as a result of the determination, the data transmission and reception unit 24 proceeds to step S202. If the URL identical to the URL added to the data acquisition request is not stored in the temporal storage device 25, on the other hand, the data transmission and reception unit 24 proceeds to step S203.

Then, the data transmission and reception unit 24 reads from the temporal storage device 25, the video content correlated to the URL added to the data acquisition request, without transmitting to the content distribution device 10, a distribution request for the video content correlated to the URL added to the data acquisition request.
Then, the data transmission and reception unit 24 outputs to the video content playback unit 23, the video content read from the temporal storage device 25.
The video content playback unit 23 displays the supplied video content on the display unit 21, and thereby performs the video content playback process.
Then, after playback of the video content supplied from the data transmission and reception unit 24 is completed, the video content playback unit 23 transits to the original selection menu screen shown in FIG. 6, and enters the user operation waiting state.

### Step S203:

The data transmission and reception unit 24 confirms whether or not the process of receiving, by cache distribution, the video content described in the data acquisition request (step S102 shown in FIG. 7) is in execution. If the reception process is in execution, the data transmission and reception unit 24 proceeds to step S204. If the reception process is not in execution, the data transmission and reception unit 24 proceeds to step S205.

Here, the data transmission and reception unit 24 compares the URL of the video content being subjected to the reception process, to the URL added to the data acquisition request. If these URLs match, the data transmission and reception unit 24 determines that the video content is being received by cache distribution. If these URLs do not match, the data transmission and reception unit 24 determines that the video content is not being received by cache distribution.

Then, if the video content is being received by cache distribution, the data transmission and reception unit 24 proceeds to step S204. On the other hand, if the video content is not being received by cache distribution, the data transmission and reception unit 24 proceeds to step S205.

### Step S204:

The data transmission and reception unit 24 suspends reception of the video content in the video content cache process (step S102) in execution, and proceeds to step S205.

### Step S205:

The data transmission and reception unit 24 transmits to the content distribution device 10, a distribution request for the video content correlated to the URL added to the data acquisition request, while adding the URL of that video content to the distribution request.
Then, the data transmission and reception unit 24 receives the video content distributed by the content distribution device 10 in response to the distribution request, and outputs the received video content to the video content playback unit 23.
Upon receiving the video content, the video content playback unit 23 displays the supplied video content on the display unit 21, thereby playing back the video content. After the playback of the video content is completed, the video content playback unit 23 transits to the original menu screen, and transits to the user operation waiting state.
By the above procedure, the content playback terminal 20 performs the video content playback process.

As explained above, using the user operation waiting period until a user selects video content from the distribution menu, the content playback terminal 20 makes a distribution request for the video content correlated to the URL described in the cache control information, before the user plays back the video content. Then, the video content preliminarily distributed by the content distribution device 10 according to that distribution request is preliminarily stored in the temporal storage device 25.
Thereby, according to the first embodiment, if the video content stored in the temporal storage device 25 is identical to the video content selected by the user from the selection menu, that video content can be read from the temporal storage device 25 and be played back without making a distribution request for that video content to the content distribution device 10, thereby enabling prompt playback of the video content.

Additionally, it is difficult to preliminarily distribute, and store in the temporal storage device 25, many video contents within a short period until a user selects video content from the distribution menu.
For this reason, in order to make a user realizes the reduction in a waiting period until playback of video content, it is necessary for the video content in the preliminarily-distributed cache control information to be selected and played back by the user at a high possibility.
For this reason, it is important to specify, in the cache control information, video content having a high possibility of being played back, such as popular video content. For this reason, it is necessary to periodically count the number of times video content has been played back. Additionally, it is necessary to extract video content for which the playback number of times is statistically great, preliminarily add the extracted video content to the cache information, and set the cache control information to the storage device 11.
Additionally, as a method of inducing a user to select from among multiple video contents on the distribution menu, video content received by cache distribution at a high possibility, it is preferable to specify, by cache control information, video content having a high possibility of being selected by a user from the distribution menu, such as video content for which the distribution number of times is great, or newly released video content, distribution of which has been just initiated.

Further, as a method of easily inducing a user to select video content added to cache control information, it is possible to configure the screen of the distribution menu displayed on the display unit 21 so that a user is likely to select the video content added to the cache control information, that is, a user is attracted to the video content added to the cache control information.

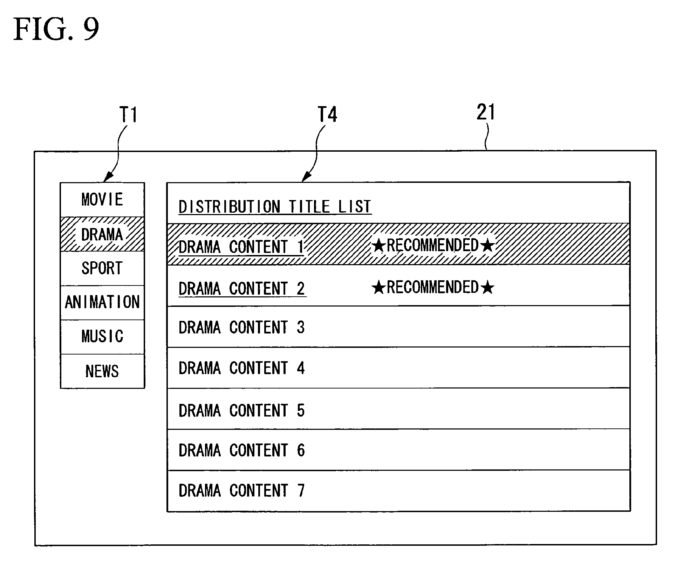

FIG. 9 is a diagram illustrating an example of menu information displayed on the display unit 21 of the content playback terminal 20, which has a configuration such that attracts a user to the video content added to the cache control information. Regarding the display of the menu information shown in FIG. 9, a list of "drama content 1" to "drama content 7" is displayed as distribution titles of video contents belonging to the genre of "drama." By the displayed position of each distribution title being clicked, the browser unit 22 detects the clicked distribution title, and outputs to the video content playback unit 23, a control signal that causes the video content having the distribution title to be played back.
Then, the video content selected by the user is subjected to the aforementioned playback process from steps S201 to S204.

If a list of multiple video contents is displayed as shown in FIG. 9, the video content listed closer to the top of the list attracts more user attention and has a higher possibility of being played back. For this reason, in the case of the display configuration shown in FIG. 9, it can be considered that the "drama content 1" listed at the top of the table T4 has the highest possibility of being played back, and the "drama content 7" listed at the bottom of the table T4 has the lowest possibility of being played back.
Additionally, if the video contents, which are described in the cache control information and which are preliminarily distributed and cached to the temporal storage device 25 of the content playback terminal 20, are the "drama content 1" and the "drama content 2" as in the case of FIG. 9, it is possible to arrange the "drama content 1" and the "drama content 2" at the top of the aforementioned table T4, and to add decoration thereto.

For example, the distribution title of the video content intended to attract user attention is underlined or is added with a decoration such as a character string "RECOMENDED," thereby making the display configuration more visually-emphasized than any other video content not described in the cache control information. In the case of FIG. 9, as an example, "RECOMMENDED" is added to the "drama content 1" and the "drama content 2." Thus, a decoration or the like is added to video content intended to attract user attention, thereby emphasizing the display of the video content on the menu as compared to other video content.
Consequently, it can be considered that the video content intended to attract user attention is likely to attract user attention, and a possibility of the video content being selected by the user increases, thereby increasing a playback possibility that is the possibility of the video content being played back by the user.

Accordingly, in the table T4 showing the list of video contents, the video content intended to attract attention is arranged at the top or close to the top of the list, or is added with a decoration to be highlighted. In other words, the video content is displayed in format so as to further attract user attention compared to video content not described in the cache control information, thereby increasing the playback possibility of the video content referred to by the cache control information. Therefore, it is possible to reduce a period required from selection of video content to playback thereof.

Additionally, instead of determining, based on the screen structure of the distribution menu, only video content added with a decoration to attract a user as the video content to be referred to by the cache control information, video content determined as having a high playback possibility based on other criteria, such as video content for which the distribution number of times is great, or newly released content, may be referred to by the cache control information.
Consequently, the video content corresponding to the great distribution number of times or the newly released video content is displayed or arranged in the menu information in a manner such that attracts user attention, as explained above. Thereby, it is possible to further reduce a period required from selection of video content to playback thereof.

Further, if a user selects, on the main menu screen, any one of distribution menus (sub-menus) corresponding to the genres from the table T1, that is, if there is a menu screen structure such that multiple menu screens are switched by user operation, a distribution menu corresponding to any one of the genres may be configured to be displayed in the initial state.
According to this configuration, for example, video content shown on the menu screen corresponding to the genre displayed on the display unit 21 in the initial state is considered to have a greater playback possibility than video content shown on the menu screen corresponding to another genre.

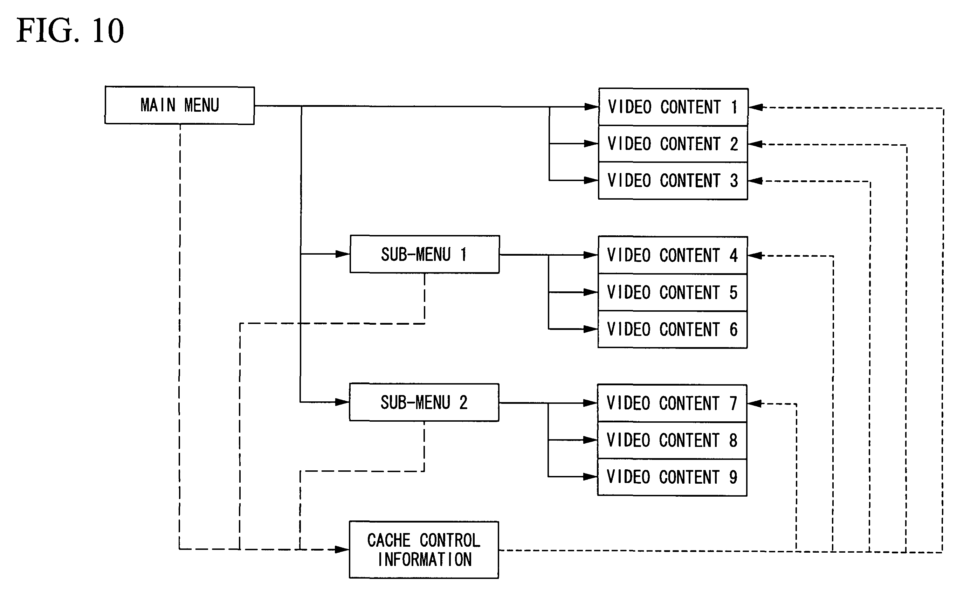

FIG. 10 is a diagram illustrating an example of reference relationship among distribution data, such as menu information, cache control information, and video content in a case where there are three menu screens, which are a main menu to be displayed in the initial state, a sub-menu 1 and a sub-menu 2 which are switched from the main menu by user selection operation and displayed.
In the case of FIG. 10, video content 1, video content 2, video content 3, video content 4, and video content 7 are referred to by cache control information. In other words, FIG. 10 illustrates an example of a configuration such that video content 1, video content 2, and video content 3, which are considered to have high playback possibilities because these video contents are referable on the main menu displayed in the initial state and therefore are likely to attract user attention, are set to be referred to by the cache control information, and that more video contents to be received by cache distribution are displayed on and selected from the main menu than those displayed on another sub-menu screen.
As explained above, video content to be referred to by cache control information is determined according to the screen structure of the distribution menu, thereby increasing the cache hit ratio.

Alternatively, instead of determining, based on the screen structure of the distribution menu, video content to be referred to by the cache control information, video content determined as having a high playback possibility based on other criteria, such as video content for which the distribution number of times is great, or newly released content, as explained above, may be set to be referred to by the cache control information, so that the set video content is displayed or arranged in the menu information in a manner that attracts user attention. Thereby, it is also possible to further increase the cache hit rate.

Alternatively, video contents, which are set to be referred to by the cache control information with respect to the genres shown in the table T1 in the case of the distribution menu shown in FIG. 9, may be configured to be grouped together and be preliminarily set with a genre, such as "recommended contents."
Thus, video contents having high playback possibilities, which are set to be referred to by the cache control information and are decentrally present on each of the menu screens corresponding to multiple genres, are grouped together on the menu screen corresponding to the genre of "recommended contents." Thereby, a possibility of video content to be selected by a user being included in the video contents received by cache distribution increases, thereby making it possible to expect an increase in the hit rate of selecting video content that achieves a reduction in a period from selection to playback.

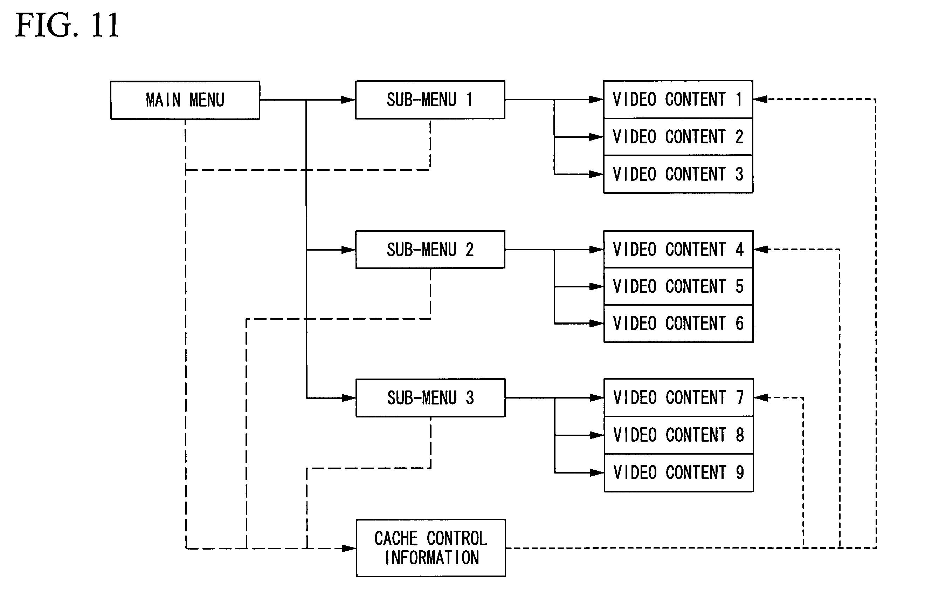

Additionally, FIG. 11 is a diagram illustrating an example of a configuration of another reference relationship among various distribution data, such as menu information, cache control information, and video content. As shown in the example of the relationship diagram shown in FIG. 11, if there is a hierarchical structure such that multiple menu informations (a main menu, sub-menu 1, sub-menu 2, and sub-menu 3) are displayed by selection with the main menu first, followed by sub-menu and video content in that order, the menus will be frequently switched until video content is selected and there will be a waiting period until video content is selected by user operation from the distribution menu.
In the case of the reference configuration as shown in FIG. 11, cache control informations to be added to the respective menu informations are made identical, thereby making it possible to perform a cache process for more video contents effectively using a user operation waiting period, without receiving all the menu informations.
In the case of FIG. 11, the reference configuration is hierarchical, and therefore there is no video content to be directly referred to on the main menu. Here, making the cache control informations identical with respect to multiple menu informations means that the cache control information in which URLs of the same video contents are described is correlated to multiple menu informations and preliminarily set to the storage device 11.
As shown in FIG. 11, however, by making the cache control informations identical, it is possible to perform a cache distribution process for video content 1, video content 4, and video content 7, which are referred to by the cache control information referred to on the main menu, from the time the main menu is displayed on the display unit 21, regardless of whether or not menu informations, which are sub-menu 1, sub-menu 2, and sub-menu 3, are received.

### (Second Embodiment)

Hereinafter, a second embodiment of the present invention is explained with reference to the drawings. A content distribution system according to the second embodiment has the same configuration as that of the first embodiment. However, configurations and functions of some of elements differ. Hereinafter, those differences are explained.
In the second embodiment, the video content playback unit 23 of the content playback terminal 20 is configured to treat as a play list, metadata, such as SMIL (Synchronized Multimedia Integration Language), as well as video content, and has an additional function of continuously playing back multiple video contents. According to this configuration, it is possible to receive only the beginning part of video content by cache distribution, reduce a period required for the cache distribution process, and before a user selects video content, preliminarily store in the temporal storage device 25, more types of video contents within a predetermined time than in the case of the first embodiment. In the second embodiment, the URL, which is described in menu information and which is correlated to the video content to be displayed on the display unit 21, is a URL of the play list. In other words, in the second embodiment, video content is divided into multiple partial video contents, and these partial video contents and a play list are correlated and preliminarily stored in the storage device 11. The playback order and identification informations of the partial video contents are described in the play list for each video content corresponding to those partial video contents. The URL of the play list is the identification information of the video content.

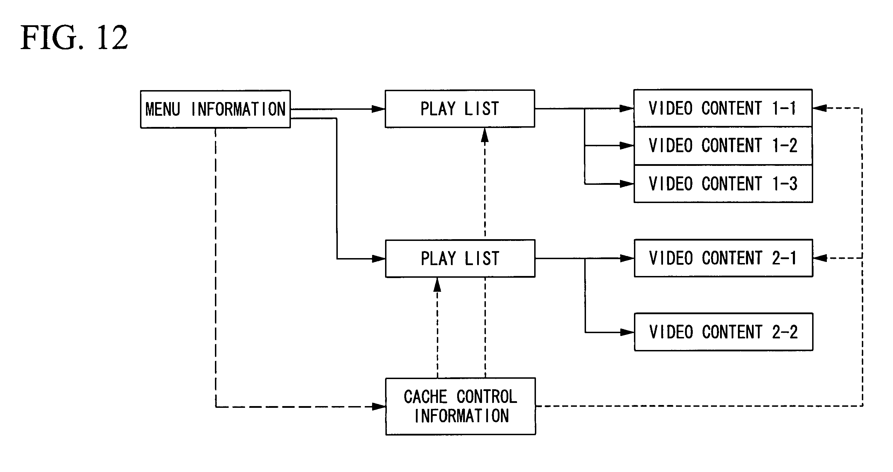

FIG. 12 is a diagram illustrating an example of specific reference relationship among distribution data including the aforementioned menu information, the play list, cache control information, and video content. As the reference relationship among distribution data which is shown in FIG. 12, the original video content is divided into multiple partial video contents, which are partial video content 1-1, partial video content 1-2, and partial video content 1-3.
Then, the partial video content 1-1, the partial video content 1-2, and the partial video content 1-3 may be sequentially and continuously played back using a play list that refers to the partial video contents. According to the reference configuration, the video content playback unit 23 can implement a playback process for each partial video content, similarly to the original video content before the division.

Regarding the reference configuration shown in FIG. 12, the menu information is configured to refer to the play list in lieu of the original video content.
Additionally, only the play list and the partial video content corresponding to the beginning part of the original video content, which is the video content 1-1 shown in FIG. 12, are referred to by the cache control information.
According to this reference configuration, data of video content that the data transmission and reception unit 24 stores in the temporal storage device 25 is only the play list and the partial video content 1-1 that is the beginning part of the video content, for one video content, thereby greatly reducing the data length required to cache one video content. Therefore, it is possible to reduce a period required to receive the video content by cache distribution and to store the received video content in the temporal storage device 25.

In the case of the aforementioned reference configuration, the cache control information referred to by the menu information is configured to refer to the play list of that video content and the URL of the partial video content 1-1, in lieu of the URL of the video content.
For this reason, the browser unit 22 transmits to the content distribution device 10, a distribution request for the play list and the partial video content which are referred to by the cache control information, while adding the URL of the play list and the URL of the partial video content 1-1 to the distribution request.
The data distributor 12 of the content distribution device 10 searches the storage device 11 for the play list and the partial video content 1-1 using the URL of the play list and the URL of the partial video content 1-1. Then, the data distributor 12 distributes, to the content playback terminal 20, the play list and the partial video content which are stored while being respectively correlated to the URL of the play list and the URL of the partial video content 1-1.

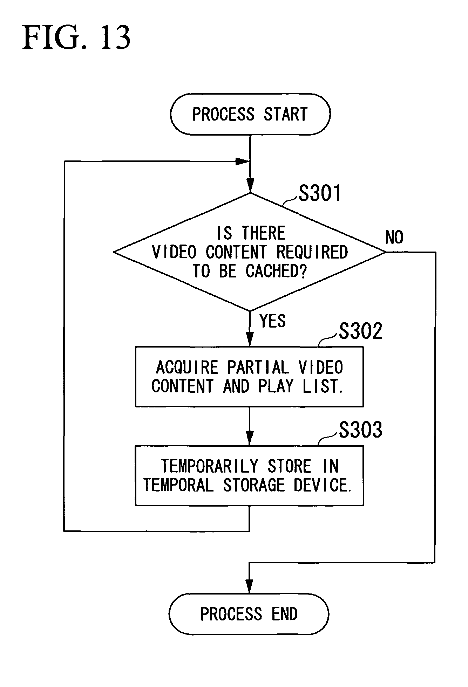

Next, operations to be performed in the user operation waiting state according to the second embodiment are explained here with reference to FIG. 13. FIG. 13 is a flowchart illustrating an example of operations to be performed in the user operation waiting state according to the second embodiment.
In the content distribution system according to the second embodiment, the browser unit 22 not only waits for user operation, but also performs a cache process for the play list and the partial video contents using the user operation waiting period. Hereinafter, an example of operations of cache distribution of video content in the user operation waiting state is explained.

### Step S301:

The data transmission and reception unit 24 of the content playback terminal 20 confirms, based on the cache control information acquired in step S202, whether or not the play list and the partial video contents, which are referred to by that cache control information, are stored in the temporal storage device 25.
Here, the partial video contents, URLs as distribution source identifiers that identify those partial video contents, the play list, and the URL as a distribution source identifier that identifies that play list are correlated to one another and stored in the temporal storage device 25.
Accordingly, the data transmission and reception unit 24 compares the URLs of the partial video contents stored in the temporal storage device 25 to the URLs of the partial video contents described in the cache control information. Further, the data transmission and reception unit 24 compares the URL of the play list stored in the temporal storage device 25 to the URL of the play list described in the cache control information.
Then, based on whether or not all the URLs of the play lists described in the cache control information and all the URLs of the partial video contents corresponding to each of those play lists are present in the temporal storage device 25, the data transmission and reception unit 24 determines whether or not the play lists and the partial video contents, which are specified by the cache control information and to be received by cache distribution, have been received by cache distribution and stored in the temporal storage device 25.
As a result, if all the play lists and the partial video contents, which are described in the cache control information, are present in the temporal storage device 25, the data transmission and reception unit 24 terminates the process of receiving the play lists and the partial video contents by cache distribution, and enters the waiting state until video content on the distribution menu displayed on the display unit 21 of the user is selected.
On the other hand, if any one of the play lists and the partial video contents which are to be received by cache distribution is not present in the temporal storage device 25, the data transmission and reception unit 24 proceeds to step S302.

### Step S302:

The data transmission and reception unit 24 extracts the URL of the play list and the URL of the partial video contents, which are not stored in the temporal storage device 25, from among the URLs of the play lists and the URLs of the partial video contents, which are described in the cache control information. Then, the data transmission and reception unit 24 adds the extracted URL of the play list and the extracted URLs of the partial video contents to a data distribution request for that play list and those partial video contents, and transmits the data distribution request to the content distribution device 10.
The data distributor 12 of the content distribution device 10 extracts the URL of the play list and the URLs of the partial video contents from the data distribution request transmitted from the data transmission and reception unit 24. Similar to the cases of the menu information and the cache control information, the data distributor 12 reads from the storage device 11 and distributes to the content playback terminal 20, the play list and the partial video contents, which are specified by the extracted URLs. The content playback terminal 20 receives the play list and the partial video contents, and proceeds to step S303.

### Step S303:

Upon receiving the play list and the partial video contents, the data transmission and reception unit 24 correlates the received play list, the URL that identifies that play list, the partial video contents, and the URLs that identify those partial video contents to one another, writes and stores those items in the temporal storage device 25, and proceeds to step S301.
By the above procedure, the cache distribution process for the play list and the partial video contents using the user operation waiting period is performed.

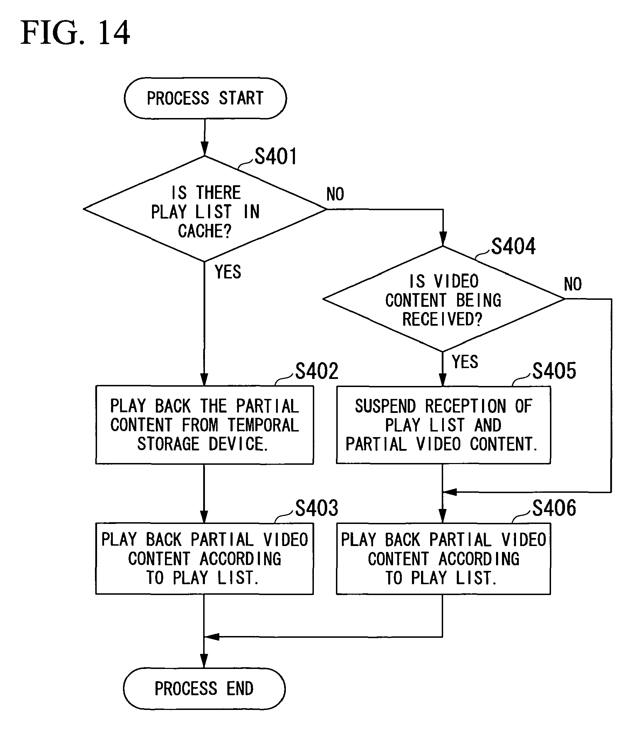

Next, operations of a video content playback process in the video content playback process state are explained here with reference to FIG. 14. FIG. 14 is a flowchart illustrating an example of operations of a video content playback process in the video content playback process state according to the second embodiment.

### Step S401:

A user clicks and selects any one of video contents included in the distribution menu displayed on the display unit 21.

The browser unit 22 extracts the URL correlated to the video content selected from the distribution menu by the user, that is, the URL of the play list, from the description of the character string of the video content and the description of the URL correlated to the video content, which are included in the menu information. Then, the browser unit 22 requests the video content playback unit 23 to play back the video content correlated to the play list specified by the URL. At this time, the browser unit 22 transmits to the video content playback unit 23, a playback request to which the URL of the play list correlated to the video content selected by the user is added.

Then, the video content playback unit 23 outputs to the data transmission and reception unit 24, a data acquisition request for the play list, to which the URL supplied from the browser unit 22 is added.

Upon receiving the data acquisition request, the data transmission and reception unit 24 extracts the URL of the play list included in the data acquisition request. Then, the data transmission and reception unit 24 searches the temporal storage device 25 using the extracted URL as a key. In other words, the data transmission and reception unit 24 compares the URL added to the data acquisition request to the URL stored as an identifier of the play list in the temporal storage device 25. Thereby, the data transmission and reception unit 24 determines the presence or absence of a URL identical to the URL added to the data acquisition request.

If the URL identical to the URL added to the data acquisition request is stored in the temporal storage device 25 as a result of the determination, the data transmission and reception unit 24 proceeds to step S402. On the other hand, if the URL identical to the URL added to the data acquisition request is not stored in the temporal storage device 25, the data transmission and reception unit 24 proceeds to step S404.

### Step S402:

Then, the data transmission and reception unit 24 reads from the temporal storage device 25, the play list correlated to the URL added to the data acquisition request, without transmitting to the content distribution device 10, a distribution request for the play list correlated to the URL added to the data acquisition request.

Then, the data transmission and reception unit 24 outputs to the browser unit 22, the play list read from the temporal storage device 25.

Upon receiving the play list, the browser unit 22 adds the URL of the partial video content which is described in that play list to control information that orders to read from the temporal storage device 25, the partial video content correlated to that URL and play back the partial video content, and outputs the control information to the video content playback unit 23.

Upon receiving the control information, the video content playback unit 23 reads from the temporal storage device 25 via the data transmission and reception unit 24, the partial content correlated to the URL described in the control information. Then, the video content playback unit 23 displays the read partial video content on the display unit 21, and thereby performs the video content playback process.

Additionally, while the video content playback unit 23 plays back the partial video content read from the temporal storage device 25, the browser unit 22 extracts another partial video content described in the play list correlated to the currently-played partial video content. In other words, the browser unit 22 compares the URL of the partial video content described in the play list to the URL of the partial video content stored in the temporal storage device 25. Then, the browser unit 22 extracts the URL of the partial content which is described in the play list, but is not stored in the temporal storage device 25, that is, the partial video content for which cache distribution has not been completed.

Then, the browser unit 22 transmits to the content distribution device 10, distribution requests for the partial video contents which are described in the play list correlated to the currently-played video content, but are not stored in the temporal storage device 25, in order described in the play list, while adding the URLs of those partial video contents to the distribution requests. Then, the browser unit 22 proceeds to step S403.

### Step S403:

Then, upon receiving the distribution requests for the respective partial video contents which are transmitted from the content playback terminal 20, the data distributor 12 of the content distribution device 10 extracts the URLs of the partial video contents from the distribution requests.

Then, the data distributor 12 searches the storage device 11 for the partial video contents using the extracted URLs as keys. Then, the data distributor 12 reads the partial video contents correlated to the extracted URLs, and sequentially distributes the read partial video contents to the content playback terminal 20.

Upon receiving the distributed partial video contents, the data transmission and reception unit 24 writes in the temporal storage device 25, the partial video contents and the URLs of the partial video contents, while correlating the partial video contents and the URLs thereof to the URL of the play list of the video content having been requested for distribution.

Here, the partial video contents are distributed in order of the play list. For this reason, before playback of the currently-played partial video content is completed, the partial video content to be played back the next can be distributed and stored in the temporal storage device 25.

Then, the browser unit 22 outputs to the video content playback unit 23, control information that orders playback of the partial video contents in order of the play lists, together with the URLs of those partial video contents.

Upon receiving the control information, the video content playback unit 23 reads from the temporal storage device 25, the partial contents correlated to the URLs described in the control information. Then, the video content playback unit 23 displays the read partial video contents on the display unit 21, and thereby performs the playback process.

### Step S404:

The data transmission and reception unit 24 conforms whether or not the process of receiving the play lists and the partial video contents by cache distribution (step S302) is in execution. If the reception process is in execution, the data transmission and reception unit 24 proceeds to step S405. If the reception process is not in execution, the data transmission and reception unit 24 proceeds to S406.

Here, the data transmission and reception unit 24 compares the URL of the play list in execution of the reception process to the URL added to the data acquisition request. If both URLs match, the data transmission and reception unit 24 detects that the play list and the partial video content are being received by cache distribution. If both URLs do not match, the data transmission and reception unit 24 detects that the play list and the partial video content are not being received by cache distribution.

Then, as explained above, if the play list and the partial video content are being received by cache distribution, the data transmission and reception unit 24 proceeds to step S405. On the other hand, if the play list and the partial video content are not being received by cache distribution, the data transmission and reception unit 24 proceeds to step S406.

### Step S405:

The data transmission and reception unit 24 suspends reception of the play list and the partial video content in the cache process for the play list and the partial video content in execution (step S302), and proceeds to step S406.

### Step S406:

The browser unit 22 transmits to the content distribution device 10, distribution requests for the partial video contents described in the play list correlated to the video content having been requested for distribution, in order described in the play list, while adding the URLs of those partial video contents to the distribution requests.

Then, upon receiving the distribution requests for the partial video contents which are transmitted from the content playback terminal 20, the data distributor 12 of the content distribution device 10 extracts the URLs of the partial video contents from those distribution requests.

Then, the data distributor 12 searches the storage device 11 for the partial video contents using the extracted URLs as keys. Then, the data distributor 12 reads the partial video contents correlated to the extracted URLs, and sequentially distributes the read partial video contents to the content playback terminal 20.

Upon receiving the distributed partial video contents, the data transmission and reception unit 24 writes in the temporal storage device 25, the partial video contents and the URLs of the partial video contents, while correlating the partial video contents and the URLs thereof to the URL of the play list of the video content having been requested for distribution.

Here, the partial video contents are distributed in order of the play list. For this reason, before playback of the currently-played partial video content is completed, the partial video content to be played back the next can be distributed and stored in the temporal storage device 25.

Then, the browser unit 22 outputs to the video content playback unit 23, control information that orders playback of the partial video contents in order described in the play list, together with the URLs of those partial video contents.

Upon receiving the control information, the video content playback unit 23 reads from the temporal storage device 25, the partial contents correlated to the URLs described in the control information. Then, the video content playback unit 23 displays the read partial video contents on the display unit 21, and thereby performs the playback process.

Additionally, instead of using the play list, video content in a predetermined size may be partially received and cached (temporarily stored) in the temporal storage device 25, thereby achieving a similar effect.
Thus, if the beginning part of the video content is configured to be partially received and preliminarily stored (cached) in the temporal storage device 25, it is necessary to transmit to the content distribution device 10, a distribution request for the other part of the video content to be played back subsequently to the beginning part of the video content, and to receive the other part, when the video content stored in the temporal storage device 25 is played back.
The size of the video content to be partially received may be configured to be preliminarily set for each type of the content playback terminal 20. Alternatively, the content distribution device 10 may be configured to preliminarily add to cache control information, information of the size of the beginning part of the video content to be partially received (such as the GOP number counted from the start point of the video content).
If the information of the size of the beginning part of the video content to be partially received is configured to be preliminarily added to the cache control information, the content playback terminal 20 is configured to control a distribution request and a playback process for the partial video content to be partially received according to the information of the size which is added to the cache control information.

If the data transmission and reception unit 24 partially receives the beginning part of the video content and if the video content stored in the temporal storage device 25 is selected, the data transmission and reception unit 24 transmits to the content distribution device 10, a distribution request for data of the video content following the size of the partially-received beginning part, while adding the URL of the video content and the information of the size of the beginning part to the distribution request.
Upon receiving the distribution request to which the URL of the video content and the information of the size of the beginning part are added, the data distributor 12 reads from the temporal storage device 11, data following the size of the beginning part of that video content, and distributes that video content to the content playback terminal 20 while adding the URL of that video content to the video content.
Thereby, the data transmission and reception unit 24 detects the corresponding video content stored in the temporal storage device 25, by referring to the URL added to the distributed video content. Then, the data transmission and reception unit 24 combines the distributed video content data following the size of the beginning part to the detected corresponding video content, and stores the combined video content data.
Here, in the case of the configuration in which partial reception is performed according to the aforementioned information of the size added to the cache control information, it is possible to preliminarily store in the temporal storage device 25, for each video content to be distributed, video content data in the optimal size according to the playback speed of the video content (such as the number of images to be displayed per unit time).

As explained above, the content playback terminal 20 is configured to partially receive the beginning part of video content which is necessary to initiate playback of the video content, and to store the beginning part in the temporal storage device 25. Thereby, it is possible to cache multiple video contents in the temporal storage device 25 within a short period of time, to promptly play back the cached video content, and to cache a large amount of video contents to be promptly played back, using the temporal storage device 25 with a limited storage capacity.

### (Third Embodiment)

Hereinafter, a third embodiment of the present invention is explained. A content distribution system according to the third embodiment is applicable to the configuration of the first embodiment, and has a similar configuration to that of the first embodiment.

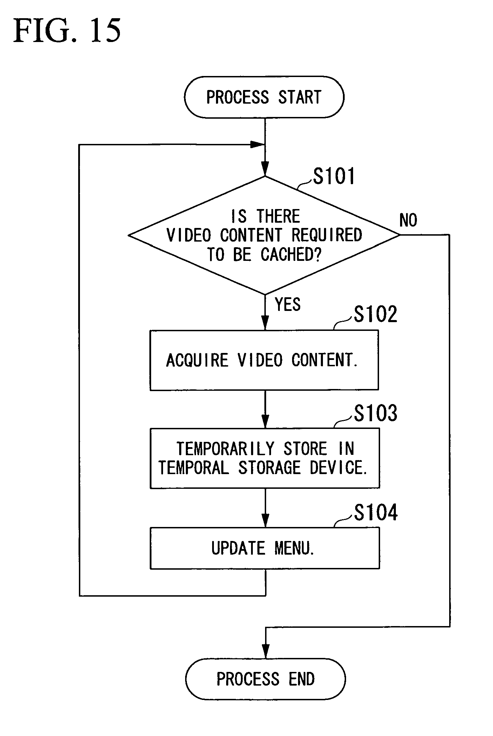

The differences from the first embodiment are operations of the process of receiving video content by cache distribution in the user operation waiting state. In the third embodiment, a menu update process in step S 104 is added with respect to the user operation waiting state of the first embodiment shown in FIG. 7. Operations of the process of receiving video content by cache distribution in the user operation waiting state of the third embodiment are explained here with reference to FIG. 15. FIG. 15 is a flowchart illustrating an example of operations of the process of receiving video content by cache distribution in the user operation waiting state of the third embodiment.

The processes from step S101 to step S 103 shown in FIG. 15 are similar to those from step S101 to step S103 in the flowchart shown in FIG. 7, and therefore explanations thereof are omitted here.

### Step S 1 04:

Each time the data transmission and reception unit 24 stores in the temporal storage device 25, the URL of the video content received by cache distribution in step S103, the data transmission and reception unit 24 outputs the URL of the received video content to the browser unit 22.

Upon receiving the URL of the video content that the data transmission and reception unit 24 stores in the temporal storage device 25, the browser unit 22 changes the menu information and proceeds to step S101.

In other words, when the browser unit 22 displays on the display unit 21, the video content stored in the temporal storage device 24, the browser unit 22 performs the process of changing the display of that video content to be highlighted.

As explained above, in the process in step S 104, when the video content received by cache distribution is stored in the temporal storage device 25, is read from the temporal storage device 25, and thus is ready to be played back, the structure of the menu screen is updated to a menu display or a menu arrangement such that attracts user attention.
Thus, regarding the video content completely received by cache distribution, the menu screen is updated to the menu display or menu arrangement such that attracts user attention. Thereby, it is possible to increase the hit rate when a user selects video content stored in the temporal storage device 25 from among video contents displayed on the distribution menu.

### (Fourth Embodiment)

Hereinafter, a fourth embodiment of the present invention is explained with reference to the drawings. A content distribution system according to the fourth embodiment is similar to that of the first embodiment, but differs in configuration and function of some of the elements. Hereinafter, the differences are explained.

The differences from the first embodiment are operations of a process of receiving video content by cache distribution in the user operation waiting state. In the fourth embodiment, attribute information is configured to be added to cache control information for each video content, so as to perform a cache distribution process adapted to capability of the content playback terminal 20 or user preference.

In other words, the difference is a step in which the browser unit 22 sets the order of reception of video contents by cache distribution, based on the attribute information added to each video content which is described in cache control information.

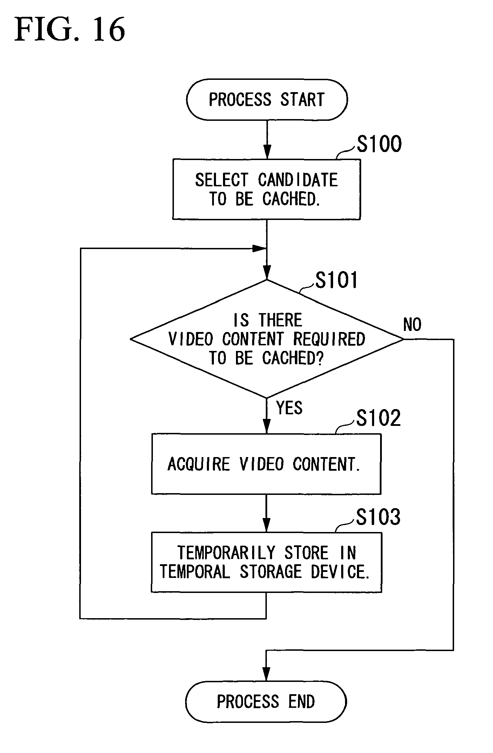

Operations of the process of receiving video content by cache distribution in the user operation waiting state of the fourth embodiment are explained with reference to FIG. 16. FIG. 16 is a flowchart illustrating an example of operations of the process of receiving video content by cache distribution in the user operation waiting state of the fourth embodiment. In addition to the steps from step S101 to step S103 explained with respect to the flowchart shown in FIG. 7, a process in step S 100 is newly added. The processes from step S101 to step S103 shown in FIG. 16 are similar to the processes from step S111 to step S103 in the flowchart shown in FIG. 7, except for the step S102. Therefore, explanations thereof are omitted here.

### Step S 100:

The data transmission and reception unit 24 reads from cache control information, attribute information added to each video content described in the cache control information.

Then, the data transmission and reception unit 24 compares a video content selection criterion preliminarily set in the data transmission and reception unit 24, to the attribute information read from the cache control information. Then, the data transmission and reception unit 24 selects from the cache control information, video content having the attribute information identical to the selection criterion.

After the video content is selected, the data transmission and reception unit 24 makes a distribution request for the video content having the attribute information identical to the selection criterion, in preference to the video content having attribute information not identical to the selection criterion.

Also in step S 102, the data transmission and reception unit 24 selects from the cache control information, video content having attribute information identical to the selection criterion, when the data transmission and reception unit 24 makes a distribution request for the video content which is described in the cache control information, but is not stored in the temporal storage device 25. Then, the data transmission and reception unit 24 makes a distribution request for the video content having the attribute information identical to the selection criterion, in preference to the video content having attribute information not identical to the selection criterion.

For example, if the data length (for example, the number of bytes) of the video content to be received by cache distribution is used, the determination criterion such that "distribution request is made first from video content with the short data length" is preliminarily set. Thereby, the data transmission and reception unit 24 extracts from the cache control information, and preferentially makes distribution requests for, video contents in order according to the data length with the video content having the shortest data length first. Thereby, it is possible to cache more video contents within a short period. Additionally, even the content playback terminal 20 including the temporal storage device 25 with a limited storage capacity (for example, low memory capacity) can preliminarily cache a large amount of video contents in the temporal storage device 25.

Additionally, for example, if genre information to which video content belongs is used as the attribute information of the video content to be described in cache control information, a genre that a user prefers may be preliminarily set as the determination criterion to the data transmission and reception unit 24.

In this case, the data transmission and reception unit 24 extracts from the cache control information, video content corresponding to the genre that user prefers, makes a distribution request for the extracted video content in preference to another video content, and stores the distributed video content in the temporal storage device 25. Thereby, it is possible to increase a possibility that video content that the user selects from the distribution menu will match the video content stored in the temporal storage device 25, that is, the cache hit rate.

### (Fifth Embodiment)

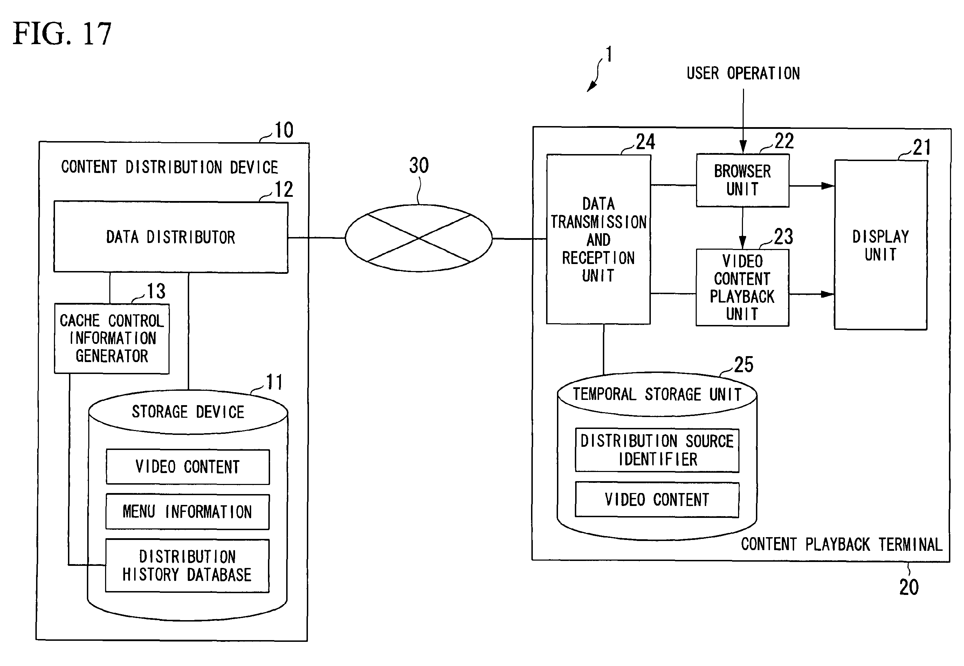

Hereinafter, a fifth embodiment of the present invention is explained with reference to the drawings. FIG. 17 is a block diagram illustrating an example of a configuration of a content distribution system according to the fifth embodiment. In FIG. 17, the same reference numerals are appended to the same configurations as those of the first embodiment shown in FIG. 1. Hereinafter, configurations and operations of the fifth embodiment which differ from those of the first embodiment are explained.
The difference from the first embodiment is in that cache control information is not preliminarily stored in the storage device 11, but the content distribution device 10 adaptively generates, for each content playback terminal 20, cache control information to be distributed to the content playback terminal 20 based on various identification informations (user identification information that identifies a user of the content playback terminal 20, distribution destination identification information such as terminal identification information which identifies the content playback terminal 20, and capability identification information that identifies the capability of the content playback terminal 20) which are added to a distribution request for distribution data (such as menu information) transmitted from the content playback terminal 20, and distributes the generated cache control information to the content playback terminal 20. Here, the capability identification information includes the playable image size, the playable format of video content, the type of audio codec, the storage capacity of the temporal storage device 25, and the like.

In FIG. 27, in lieu of the cache control information of the first embodiment, for example, a region of a distribution history database that stores video content distribution history for each content playback terminal 20 is provided in the storage device 11. Distribution destination identification information, such as user identification information or terminal identification information, which is added to the data distribution request, and a URL of video content distributed to the content playback terminal 20 specified by that distribution destination identification information, are correlated and stored in the distribution history database.
The cache control information generator 13 generates cache control information for each content playback terminal 20, based on various identification informations and distribution destination identification information which are added to the data distribution request, such as a distribution request for the menu information.

At this time, the cache control information generator 13 extracts the distribution destination identification information from the distribution request, searches the distribution history database of the storage device 11 using that distribution destination identification information as a key, and extracts video content stored while being correlated to that distribution destination identification information.
Then, the cache control information generator 13 determines the genre of the extracted video content based on the genre identification information which is added to the video content and stored in the storage device 11, and thus extracts the genre for which many video contents are requested for distribution.
After the genre is extracted, the cache control information generator 13 selects video content corresponding to the capability identification information of the content playback terminal 20, from among the video contents belonging to the extracted genre which are stored in the storage device 11. Additionally, the cache control information generator 13 adds the URL of the selected video content to the cache control information, and distributes the cache control information together with the menu information to the content playback terminal 20 via the data distributor 12. Here, not only the information that identifies the genre, but also the amount of data (GOP number), the data format, data indicating the type of audio codec are added to the video content stored in the storage device 11.

By the above configuration, according to the fifth embodiment, each content playback terminal 20 analyzes preference of a user operating that content playback terminal 20 by referring to the genre of the video contents previously requested for distribution, based on the distribution history stored for each distribution destination identification information in the distribution history database of the storage device 11. Then, each content playback terminal 20 generates cache control information corresponding to the preference of each user and the capability of the content playback terminal. For this reason, in addition to the effect of the first embodiment, it is possible to individually distribute to each content playback terminal, the cache control information including video contents adapted to user preference.
Additionally, the data distributor 12 receives a distribution request for video content from the content playback terminal 20, and distributes the requested video content. Thereafter, the data distributor 12 correlates the URL of the video content actually requested for distribution by the content playback terminal 20 to the distribution destination identification information added to the distribution request, and stores the URL and the distribution destination identification information in the distribution history database of the storage device 11.

Additionally, as the user identification information that the content playback terminal 20 transmits together with the data distribution request, the account name, user authentication information expressed by a combination of passwords, a session cookie set by the content distribution device 10, or the like, may be used.
Further, as the terminal identification information, the unique terminal number, such as the product serial number of the content playback terminal 20, may be used. Alternatively, a session cookie may be used similarly to the case of the user identification information.
Moreover, as the capability identification information, the user agent name included in the HTTP request header, or the like, may be used. In other words, for example, the storage capacity of the temporal storage device 25 of the content playback terminal 20 is detected using the user agent name. Then, according to the detected storage capacity of the temporal storage device 25, video content is selected from the storage device 11 based on the preliminarily set correlation among the storage capacity, the amount of video content data, and the number of video contents. Then, cache control information in which the URL of the selected video content is described may be distributed to each content playback terminal 20.

Additionally, it has been explained above that based on the URL of the video content described in the received cache control information, the data transmission and reception unit 24 of the content playback terminal 20 makes a cash-distribution request for the video content while adding the URL to the distribution request.
However, in lieu of the cache control information in which the URL is described, the content distribution device 10 may be configured to add to the menu information, a program, such as ECMA (European Computer Manufacture Association) Script, Java (registered trademark), or Java applet, which can be executable by the browser unit 22 compatible with the HTML format, and distribute the menu information to the content playback terminal 20. When the content playback terminal 20 receives the menu information, the browser unit 22 extracts from the menu information, the program added to that menu information, and executes the program. If this program is run, a distribution request for video content is transmitted by referring to the URL described in the program, to the content distribution device 10 via the data transmission and reception device 24.
Then, the data transmission and reception device 24 correlates the video content distributed from the content distribution device 10 to the URL of the video content, and stores the video content and the URL thereof in the temporal storage device 25.
As explained above, a program, such as the ECMA Script, or the Java (registered trademark) applet, is used to perform distribution control for cache distribution of video content, thereby enabling different cache distribution control for each content distribution service provider.
Thereby, the description of the program is changed when video content is transmitted to the content playback terminal 20, thereby enabling flexible cache distribution control for each content playback terminal 20.

Additionally, a computer-readable recording medium may store a program for implementing the functions of: the browser unit 22 and the video content playback unit 23 which are shown in FIGS. 1 and 17; the data distributor 12 shown in FIG. 1; and the data distributor 12 and the cache control information generator 13 which are shown in FIG. 17, so that a computer system reads and executes the program stored in the recording medium to perform the video content distribution control and the video content playback control. Here, the "computer systems" include OS and hardware, such as a peripheral device.

Further, the "computer systems" include home page provision environments (or display environments) as long as a WWW system is used.
Moreover, the "computer-readable recording medium" indicates a storage device, which includes a portable medium such as a flexible disc, a magneto-optical disc, a ROM, and a CD-ROM, and a storage device such as a hard disk built in the computer system. Additionally, the "computer-readable recording medium" may include a medium that dynamically stores a program for a short period of time, such as a communication line used when a program is transmitted via a network such as the Internet or a communication line such as a telephone line. Additionally, the "computer readable recording medium" may include a medium that stores a program for a predetermined period of time, such as a volatile memory built in a computer system serving as a server or client when the program is transmitted via a network such as the Internet or a communication line such as a telephone line. Moreover, the program may be a program for implementing part of the aforementioned functions. Further, the program may be a program that can implement the aforementioned functions in combination with a program already recorded in the computer system.

Embodiments of the present invention have been explained above in detail with reference to the drawings. However, the specific configuration is not limited thereto. Various modifications may be made without departing from the scope of the present invention.

### INDUSTRIAL APPLICABILITY

The present invention is suitable to be used for a content distribution system and a content distribution device, and can reduce a waiting period from the time a distribution request for video content is made to the time playback of the video content is initiated, compared to the conventional distribution method.

### DESCRIPTION OF REFERENCE NUMERALS

- 1:: content distribution system
- 10:: content distribution device
- 11:: storage device
- 12:: data distributor
- 13:: cache control information generator
- 20:: content playback terminal
- 21:: display unit
- 22:: browser unit
- 23:: video content playback unit
- 24:: data transmission and reception unit
- 25:: temporal storage device
- 30:: communication network

## Claims

1. A content distribution system in which a content distribution device performs on-demand distribution of video content to a content playback terminal via a network,
wherein the content distribution device comprises:
a storage unit configured to store at least a plurality of video contents, and menu information in which a list of the video contents and identification informations of the video contents are described; and
a data distributor configured to add to the menu information, cache control information in which at least one of the video contents described in a distribution menu is described, and distribute the menu information to the content playback terminal, and if identification information indicating the video content is received from the content playback terminal, the data distributor being configured to read the video content corresponding to the identification information from the storage unit, and transmit the video content to the content playback terminal, and
the content playback terminal comprises:
a display unit;
a temporal storage unit;
a video content playback unit configured to cause the display unit to display the menu information and the video content;
a browser unit configured to add to a distribution request, the identification information of video content selected from the video contents on the distribution menu displayed on the display unit based on the menu information, and transmit the distribution request to the content distribution device; and
a data transmission and reception unit configured to, if the cache control information is added to the menu information, transmit to the content distribution device, a distribution request for the video content described in the cache control information, before a user selects video content from the distribution menu, and the data transmission and reception unit being configured to write in the temporal storage unit, the video content distributed in response to the distribution request.

2. The content distribution system according to claim 1, wherein the storage unit is configured to store a plurality of menu informations and cache control information correlated to the menu informations, identification information of the same video content being described in the cache control information.

3. The content distribution system according to claim 1 or 2, wherein each of the video contents is divided into a plurality of partial video contents,
the storage unit is configured to store, for each of the video contents which corresponds to the partial video contents, the partial video contents and a play list correlated to the partial video contents, a playback order of the partial video contents and identification informations of the partial video contents being described in the play list, and
identification information of the video content is added to the play list.

4. The content distribution system according to claim 1 or 2, wherein if the data transmission and reception unit makes a distribution request for the video content described in the cache control information, the data distributor is configured to transmit to the content playback terminal, a beginning part of the video content requested for distribution, the beginning part having a predetermined amount of data counted from a playback start point of the video content.

5. The content distribution system according to any one of claims 1 to 4, wherein the browser unit is configured to display, when displaying the distribution menu on the display unit, video content described in the cache control information in a visually more emphasized display format, compared to video content not described in the cache control information.

6. The content distribution system according to any one of claims 1 to 4, wherein the browser unit is configured to group one or more video contents, which are described in the cache control information and stored in the temporal storage unit, to one genre on the distribution menu, and display the genre with other genres on the distribution menu.

7. The content distribution system according to any one of claims 1 to 6, wherein attribution information is added to the cache control information for each of the video contents, and
the data transmission and reception unit is configured to determine, based on the attribute information, an order of distribution requests for the video contents described in the cache control information.

8. The content distribution system according to claim 7, wherein the attribute information includes the data lengths of the video contents, and
the data transmission and reception unit is configured to make distribution requests for the video contents described in the cache control information in order according to the data length with the shortest data length first.

9. The content distribution system according to claim 7, wherein the attribute information includes information indicating a genre of the video content, and
the data transmission and reception unit is configured to make a distribution request for the video content which is described in the cache control information and is added with the attribute information indicating the same genre as a genre preliminarily set in the data transmission and reception unit, in preference to the video content which is described in the cache control information and is added with the attribute information indicating a different genre from the genre preliminarily set.

10. The content distribution system according to any one of claims 1 to 6, wherein the content distribution device further comprises:
a distribution history database configured to store identification informations of the video contents requested for distribution and distribution destination identification informations that identify sources of the distribution requests for the video contents, while correlating the identification informations and the distribution destination identification informations; and
a cache control information generator configured to generate different cache control informations respectively for the distribution destination identification informations, based on a distribution history recorded in the distribution history database,
wherein the cache control information generator is configured to read the distribution history corresponding to each of the distribution destination identification informations, and generate different cache control informations respectively for the distribution destination identification informations, and
the data distributor is configured to distribute the cache control informations generated by the cache control information generator, to content playback terminals respectively corresponding to the distribution source identification informations.

11. A content distribution device configured to be used in a content distribution system in which the content distribution device performs on-demand distribution of video content to a content playback terminal via a network, the content distribution device comprising:
a storage unit configured to store at least a plurality of video contents, and menu information in which a list of the video contents and identification informations of the video contents are described; and
a data distributor configured to add to the menu information, cache control information in which at least one of the video contents described in a distribution menu is described, and distribute the menu information to the content playback terminal, and if identification information indicating the video content is received from the content playback terminal, the data distributor being configured to read the video content corresponding to the identification information from the storage unit, and transmit the video content to the content playback terminal.

12. A content playback terminal configured to be used in a content distribution system in which a content distribution device performs on-demand distribution of video content to the content playback terminal via a network, the content playback terminal comprising:
a display unit;
a temporal storage unit;
a video content playback unit configured to cause the display unit to display the menu information and the video content;
a browser unit configured to add to a distribution request, the identification information of video content selected from the video contents on a distribution menu displayed on the display unit based on the menu information, and transmit the distribution request to the content distribution device; and
a data transmission and reception unit configured to, if the cache control information is added to the menu information, transmit to the content distribution device, a distribution request for the video content described in the cache control information, before a user selects video content from the distribution menu, and the data transmission and reception unit being configured to write in the temporal storage unit, the video content distributed in response to the distribution request.

13. A content distribution method using a content distribution system in which a content distribution device performs on-demand distribution of video content to a content playback terminal via a network, the content distribution method comprising steps for a data distributor included in the content distribution device:
adding to menu information showing video contents to be distributed, cache control information in which at least one of video contents described in a distribution menu is described;
distributing the menu information to the content playback terminal;
if identification information indicating the video content is received from the content playback terminal, reading the video content corresponding to the identification information from a storage unit storing at least a plurality of video contents, and menu information in which a list of the video contents and identification informations of the video contents are described; and
transmitting the video content to the content playback terminal, and
the content distribution method further comprising:
if a video content playback unit of the content playback terminal causes a display unit of the content playback terminal to display the menu information and the video content, a step of a browser unit of the content playback terminal adding to a distribution request, the identification information of video content selected from the video contents on the distribution menu displayed on the display unit based on the menu information, and transmitting the distribution request to the content distribution device; and
if the cache control information is added to the menu information, a step of a data transmission and reception unit of the content playback terminal transmitting to the content distribution device, a distribution request for the video content described in the cache control information, before a user selects video content from the distribution menu, and writing in the temporal storage unit, the video content distributed in response to the distribution request.
